# EUROPÄISCHE PATENTSCHRIFT

(11) **EP 3 157 700 B1**
(45) Veröffentlichungstag und Bekanntmachung des Hinweises auf die Patenterteilung: **10.05.2023**
(21) Anmeldenummer: 15730726.5
(22) Anmeldetag: 11.06.2015
(51) Int. Cl.: B23C 5/10

(54) **ROTATIONSSCHNEIDWERKZEUG**
ROTARY CUTTING TOOL
OUTIL DE COUPE À ROTATION

(30) Priorität: 17.06.2014 DE 102014108513
(43) Veröffentlichungstag der Anmeldung: 26.04.2017
(73) Patentinhaber: Franz Haimer Maschinenbau KG, 86568 Hollenbach-Igenhausen (DE)
(72) Erfinder: HAIMER, Franz-Josef, 86568 Igenhausen (DE); SANHIETER, Reinhold, 86558 Hohenwart (DE)
(74) Vertreter: Schwarz, Wolfgang
(86) Internationale Anmeldenummer: PCT/EP2015/063080
(87) Internationale Veröffentlichungsnummer: WO 2015/193173

(56) Entgegenhaltungen:
- EP-A1- 1 340 573
- EP-A2- 1 072 345
- DE-A1-102009 023 299
- DE-C1- 10 050 229
- DE-T2- 60 125 363
- JP-A- 2002 144 122
- US-A- 4 285 618
- US-A1- 2013 315 681
- US-B1- 7 399 147
- DATABASE WPI Week 201119 Thomson Scientific, London, GB; AN 2011-A81595 XP002744277, -& CN 101 920 354 A (ZHUZHOU CEMENTED CARBIDE CUTTING TOOLS C) 22. Dezember 2010 (2010-12-22)
- DATABASE WPI Week 201369 Thomson Scientific, London, GB; AN 2013-Q11081 XP002744278, -& JP 2013 202748 A (MITSUBISHI MATERIALS CORP) 7. Oktober 2013 (2013-10-07)

## Beschreibung

Die Erfindung betrifft ein Rotationsschneidwerkzeug nach dem Oberbegriff des Anspruchs 1.

Aus der US 2013/0315681 ist ein Rotationsschneidwerkzeug in Form eines Wendelbohrers bekannt, das eine Rotationsachse, einen Schaftbereich und einen Schneidbereich aufweist. Im Schneidbereich des Wendelbohrers sind mehrere Spannuten angeordnet, die nach innen bis zu einem Kernprofil reichen. Über die Länge des Schneidbereichs ist ein Abschnitt vorgesehen, in dem die Querschnittsfläche des Kernprofils zunimmt und ein Abschnitt, in dem die Querschnittsfläche des Kernprofils abnimmt. Durch die stark verringerte Querschnittsfläche beim Übergang zu dem Schaftbereich wird jedoch die Stabilität des Wendelbohrers sowohl gegenüber seitlichen Belastungen als aus Torsionsbelastungen deutlich reduziert. Aus diesem Grund kann es verstärkt zu Schwingungen kommen, die sich nachteilig auf die Standzeiten und die Bearbeitungsqualität auswirken.

Die CN 101 920 354 A offenbart ein Rotationsschneidwerkzeug mit einem in etwa eiförmigen asymmetrischen Kernprofil, welches um die Rotationsachse des Schneidwerkzeugs rotiert.

Die CN 2013 202 748 offenbart ein Rotationsschneidwerkzeug, bei dem sich die Tiefenrichtung vom Schneidbereich zum Schaftbereich vergrößert, wobei dortige Schneiden unterschiedliche Schneidwinkel aufweisen.

Die DE 10 2009 023 299 A1 offenbart einen Bohrer mit einer oder mehreren Wendeln, die eine Hüllfläche aufspannt oder aufspannen und sich spiralig um einen Kern erstreckt oder erstrecken, wobei der Kern in der Seitenansicht mindestens eine Biegung und mindestens eine Gegenbiegung aufweist, die innerhalb der Hüllfläche verlaufen.

Die DE 601 25 363 T2 betrifft ein Allgemein rotierendes Bohrwerkzeug, das einen allgemein zylinderförmigen Körper hat, der mit einem Kopf endet, und das, zumindest auf einen Teil der Länge seines Körpers eine oder mehrere, spiralförmige Auskehlungen zum Ausräumen hat, welche über zumindest einen Teil Ihrer Länge durch eine Abfolge von aufeinanderfolgende Facetten begrenzt sind.

Die DE 10 50 229 C1 offenbart einen Wendelbohrer für Gestein, der einen zwischen einem Einsteckende und einem Werkzeugkopf angeordneten, längs einer Drehachse wendelförmig um einen Schaft verlaufenden Wendelgang aufweist, wobei dessen breite des Rückens in Richtung des Werkzeugkopfes verstärkt ist.

Die US 7 399 947 B1 offenbart einen mit einer Vielzahl von Zähnen versehenen Schaftfräser welche sich schraubenförmig erstrecken und eingekerbt sind. Die Kerben unterbrechen die Schneidkante der Zähne an verschiedenen Stellen zwischen einem Zahnkopf und einem Zahnfuß, wobei unterschiedliche Kerbenmuster vorgestellt werden.

Die US 4 285 618 offenbart einen Fräser umfassend einen Schneidabschnitt mit einer Vielzahl von Klingen, die auf der Oberfläche positioniert und durch Rillen voneinander getrennt sind. Mindestens 2 Klingen haben ein oder mehrere glatte Segmente, die eine ebene und ungebrochene Fläche und Schneidkante aufweise, die von einem oder mehreren gezackten Segmenten durchsetzt sind, die eine Reihe von Schneidzähnen enthalten. Dabei sind die Positionen der glatten und gezahnten Segmente von Klinge zu Klinge so versetzt, dass im Verlauf einer vollständigen Umdrehung des Fräsers jeder Punkt entlang einer vom Fräser bearbeiteten Fläche von mindestens einem glatten Segment und mindestens einem gezahnten Segment erfasst werden.

Die EP 1 340 573 A1 betrifft ein Verfahren zur Herstellung eines Werkzeugs, insbesondere in Form eines Bohrers oder Fräsers mit wenigstens einer Förderwendel ausgehend von einem stangenförmigen Rohling, wobei vorgesehen ist, die Förderwendel in einem einzigen Arbeitsgang durch ein Bearbeitungswerkzeug einzubringen und der Rohling einen Durchmesser aufweist, welcher größer ist als ein Durchmesser der Förderwendel.

Die EP 1 072 345 A2 betrifft einen Rotationsmehrzahnschaftfräser bei dem die gesamte Querschnittsfläche des Fräsermaterials vom Schneidende zum Fräserschaft hin allmählich zunimmt, wobei der Kern des Schneiders vorzugsweise gerade, konvex oder konkav verjüngt ist.

Die JP 2002 144-122A betrifft einen Bohrer, bei dem ein Winkel, der zwischen Linien gebildet wird, die die jeweiligen eingeschnittenen und erhabenen Teile von Spannabfuhrnuten und die Rotationsachse verbinden, gleich oder kleiner < 90° eingestellt wird. Dabei ist eine Spanabfuhrnut so ausgebildet, dass sie sich um etwa die Hälfte eines Messerkantenteils länger als die andere Spanabfuhrnut umschlingt. Die Richtung der Späne die von den Spanabfuhrnuten abgegeben werden, sind im Wesentlichen gleichförmig in der gleichen Richtung. Dabei ergeben sich unterschiedliche Querschnittsflächen bei einem Querschnitt durch den gesamten Bohrer, wobei das Kernprofil trotz der unterschiedlichen Querschnitte durch den gesamten Bohrer zylindrisch ist.

Aufgabe der Erfindung ist es, ein vibrationsarmes Rotationsschneidwerkzeug zu schaffen, welches eine präzise Bearbeitung und eine hohe Oberflächenqualität bei langen Standzeiten ermöglicht.

Diese Aufgabe wird durch ein Rotationsschneidwerkzeug mit den Merkmalen des Anspruchs 1 gelöst. Vorteilhafte Ausgestaltungen der Erfindung sind in den Unteransprüchen angegeben.

Das erfindungsgemäße Rotationsschneidwerkzeug zeichnet sich dadurch aus, dass das Kernprofil über die Länge des Schneidbereichs mehrere einander abwechselnde Abschnitte mit zunehmender Querschnittsfläche und Abschnitte mit abnehmender Querschnittsfläche enthält. Bevorzugt kann dabei die Mittellinie des Kernprofils einen von der Rotationsachse des Rotationsschneidwerkzeugs abweichenden Verlauf aufweisen. Sowohl durch die zur Rotationsachse asymmetrische Anordnung des Kernprofils als auch durch die Ausbildung mehrerer einander abwechselnder Abschnitte mit zu- und abnehmender Querschnittsfläche der Kernprofile wird jeweils für sich alleine eine deutliche Verbesserung der Schwingungsdämpfung und des Spanbruchs erreicht, ohne dass die Stabilität merklich reduziert wird. Werden beide Merkmale zusammen verwendet, entsteht der zusätzliche Effekt, dass die Masseverteilung im Schneidbereich optimal angepasst werden kann, um hierdurch die Schwingungsdämpfung der asymmetrischen Anordnung der Kerndurchmesser überdurchschnittlich zu verbessern. Hierdurch können zuverlässig Schwingungen in dem Rotationsschneidwerkzeug unterdrückt werden, was einen ruhigen Lauf und damit eine hohe Oberflächenqualität und lange Standzeiten ermöglicht. Gerade bei Rotationsschneidwerkzeugen in Form von Fräsern sind diese Vorteile umso beachtlicher, da dort die Seitenkräfte bei der Bearbeitung deutlich größer sind und eine Reduzierung der Querschnittsfläche des Kernprofils üblicherweise zu einer unzulässigen Schwächung der Stabilität führt.

In einer vorteilhaften Ausführungsform kann die Mittellinie des Kernprofils über die Länge des Schneidbereichs auf einer spiralförmigen Bahn verlaufen. Die Steigung und der Durchmesser der spiralförmigen Bahn können je nach Anwendungsfall variiert werden, insbesondere ist es möglich, den Durchmesser und die Steigung über die Länge des Schneidbereichs verschieden auszuführen.

In einer besonders vorteilhaften Ausführungsform kann die auf der spiralförmigen Bahn verlaufende Mittellinie eine zu der Rotationsachse des Rotationsschneidwerkzeugs kongruente Mittelachse aufweisen. Es ist aber auch möglich, die Mittelachse der spiralförmig verlaufenden Mittellinie versetzt zur Rotationsachse des Rotationsschneidwerkzeugs auszubilden.

In einer alternativen bevorzugten Ausführungsform kann die Mittellinie des Kernprofils über die Länge des Schneidbereichs bevorzugt sinusförmig verlaufen. Dabei kann besonders bevorzugt die sinusförmig verlaufende Mittellinie so angeordnet sein, dass sie die Rotationsachse des Rotationswerkzeugs schneidet. Je nach Ausgestaltung der Mittellinie kann diese die Rotationsachse nur einmal oder auch mehrere Male schneiden, wobei der Abstand zwischen den Schnittpunkten gleichmäßig oder verschieden sein kann.

In einer vorteilhaften Ausgestaltung kann die Querschnittsfläche des Kernprofils in Richtung vom Schaftbereich zum Schneidbereich hin abnehmen. Diese Abnahme der Querschnittsfläche kann kontinuierlich oder mit abschnittsweise konstanten Querschnittsflächen erfolgen. Zudem ist es auch möglich, im Schneidbereich Abschnitte mit zunehmender Querschnittsfläche vorzusehen, solange insgesamt über die gesamte Länge des Schneidbereichs die Querschnittsfläche abnimmt. Durch die reduzierte Masse am freien Ende des Schneidbereichs des Rotationsschneidwerkzeugs wird die Eigenfrequenz des Schneidbereichs partiell verändert, was eine optimale Anpassung an die jeweiligen Bearbeitungsanforderungen ermöglicht.

In einer zweckmäßigen Ausführungsform kann das Kernprofil eine kreisrunde oder eine von der Kreisform abweichende Querschnittsfläche aufweisen.

Um die Schwingungsneigung zusätzlich zu minimieren, können im Schneidbereich Schneiden mit unterschiedlichen Drallwinkeln und/oder rechtwinklig zur Rotationsachse oder in Form einer Spirale verlaufenden Spanbrechernuten vorgesehen sein, so dass zusammen mit der erfindungsgemäß hervorragenden Schwingungsdämpfung die Gefahr von Schwingungen bei dem Rotationsschneidwerkzeug zuverlässig reduziert wird.

Der Schneidbereich des Rotationsschneidwerkzeugs kann eine zylindrische, konische oder gekrümmte Außenform aufweisen.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: eine Darstellung eines ersten erfindungsgemäßen Rotationsschneidwerkzeugs mit mehreren einander abwechselnden Abschnitten mit zunehmender und abnehmender Querschnittsfläche;
- **Fig. 1a**: eine Schnittdarstellung des ersten erfindungsgemäßen Rotationsschneidwerkzeugs entlang der Linie A-A aus Figur 1;
- **Fig. 1b**: eine Schnittdarstellung des ersten erfindungsgemäßen Rotationsschneidwerkzeugs entlang der Linie B-B aus Figur 1;
- **Fig. 1c**: eine Schnittdarstellung des ersten erfindungsgemäßen Rotationsschneidwerkzeugs entlang der Linie C-C aus Figur 1;
- **Fig. 2**: eine Darstellung eines zweiten erfindungsgemäßen Rotationsschneidwerkzeugs mit asymmetrischem Kerndurchmesser;
- **Fig. 2a**: eine Schnittdarstellung des zweiten erfindungsgemäßen Rotationsschneidwerkzeugs entlang der Linie A-A aus Figur 2;
- **Fig. 2b**: eine Schnittdarstellung des zweiten erfindungsgemäßen Rotationsschneidwerkzeugs entlang der Linie B-B aus Figur 2;
- **Fig. 2c**: eine Schnittdarstellung des zweiten erfindungsgemäßen Rotationsschneidwerkzeugs entlang der Linie C-C aus Figur 2;
- **Fig. 2d**: eine Schnittdarstellung des zweiten erfindungsgemäßen Rotationsschneidwerkzeugs entlang der Linie D-D aus Figur 2;
- **Fig. 3**: eine Darstellung eines dritten erfindungsgemäßen Rotationsschneidwerkzeugs mit asymmetrischem und in der Querschnittsfläche abnehmendem Kerndurchmesser;
- **Fig. 3a**: eine Schnittdarstellung des dritten erfindungsgemäßen Rotationsschneidwerkzeugs entlang der Linie A-A aus Figur 3;
- **Fig. 3b**: eine Schnittdarstellung des dritten erfindungsgemäßen Rotationsschneidwerkzeugs entlang der Linie B-B aus Figur 3;
- **Fig. 3c**: eine Schnittdarstellung des dritten erfindungsgemäßen Rotationsschneidwerkzeugs entlang der Linie C-C aus Figur 3;
- **Fig. 3d**: eine Schnittdarstellung des dritten erfindungsgemäßen Rotationsschneidwerkzeugs entlang der Linie D-D aus Figur 3;
- **Fig. 4**: eine Darstellung eines fünften erfindungsgemäßen Rotationsschneidwerkzeugs mit unstetigem Verlauf der Querschnittsflächen zwischen Abschnitten mit abnehmender Querschnittsfläche und Abschnitten mit zunehmender Querschnittsfläche sowie kreisrunden Querschnittsflächen;
- **Fig. 4a**: eine Schnittdarstellung des fünften erfindungsgemäßen Rotationsschneidwerkzeugs entlang der Linie A-A aus Figur 4;
- **Fig. 4b**: eine Schnittdarstellung des fünften erfindungsgemäßen Rotationsschneidwerkzeugs entlang der Linie B-B aus Figur 4;
- **Fig. 4c**: eine Schnittdarstellung des fünften erfindungsgemäßen Rotationsschneidwerkzeugs entlang der Linie C-C aus Figur 4;
- **Fig. 5**: eine Darstellung eines sechsten erfindungsgemäßen Rotationsschneidwerkzeugs mit unstetigem Verlauf der Querschnittsflächen zwischen Abschnitten mit abnehmender Querschnittsfläche und Abschnitten mit zunehmender Querschnittsfläche sowie von der Kreisform abweichenden Querschnittsflächen;
- **Fig. 5a**: eine Schnittdarstellung des sechsten erfindungsgemäßen Rotationsschneidwerkzeugs entlang der Linie A-A aus Figur 5;
- **Fig. 5b**: eine Schnittdarstellung des sechsten erfindungsgemäßen Rotationsschneidwerkzeugs entlang der Linie B-B aus Figur 5 und
- **Fig. 5c**: eine Schnittdarstellung des sechsten erfindungsgemäßen Rotationsschneidwerkzeugs entlang der Linie C-C aus Figur 5.

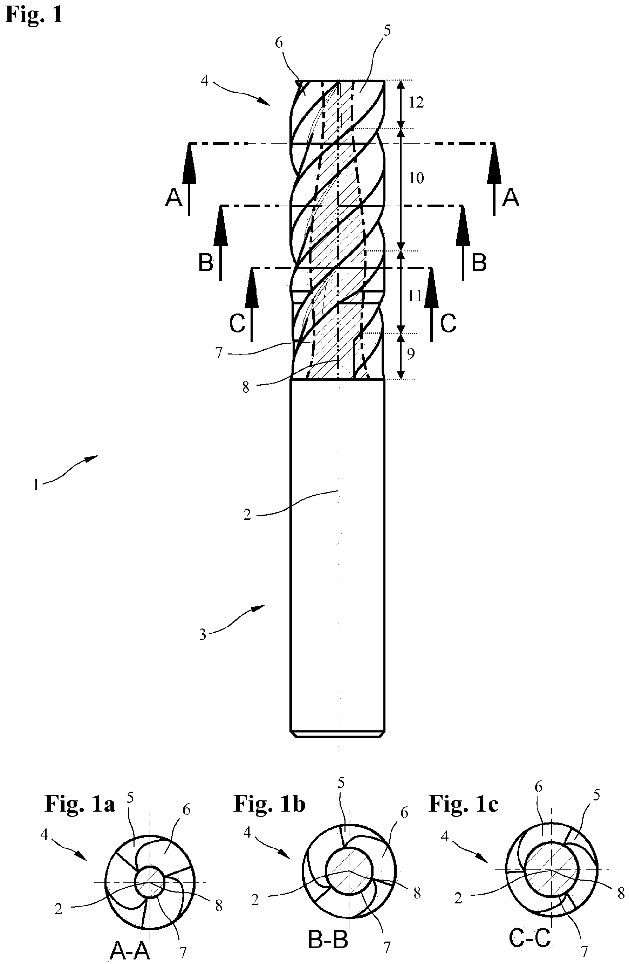

In Figur 1 ist ein erstes erfindungsgemäßes Rotationsschneidwerkzeug 1 in Form eines zylindrischen Schaftfräsers gezeigt, der sich während der Bearbeitung um eine Rotationsachse 2 dreht. An dem Rotationsschneidwerkzeug 1 ist ein Schaftbereich 3 vorgesehen, mit dem das Rotationsschneidwerkzeug 1 in eine Aufnahme einer Spindel einer Bearbeitungsmaschine, wie beispielsweise einer Mehrachsfräse, befestigbar ist. Zudem ist an dem Rotationsschneidwerkzeug 1 ein Schneidbereich 4 ausgebildet, der mehrere durch Spannuten 5 getrennte Schneiden 6 aufweist. Die Tiefe der Spannuten 5 wird durch ein Kernprofil 7 des Schneidbereichs 4 begrenzt. Das Kernprofil 7 ist achsensymmetrisch zur Rotationsachse 2 ausgebildet, so dass eine Mittellinie 8 des Kernprofils 7, die aus den Mittelpunkten aller Querschnittsflächen des Kernprofils 7 über die Länge des Schneidbereichs 4 gebildet ist, der Rotationsachse 2 entspricht.

Das Kernprofil 7 des ersten Rotationsschneidwerkzeugs 1 weist mehrere Abschnitte 9, 10 mit abnehmender Querschnittsfläche und Abschnitte 11, 12 mit zunehmender Querschnittsfläche auf, die sich einander abwechseln. In Richtung vom Schaftbereich 3 hin zum Schneidbereich 4 nimmt die Querschnittsfläche des Kernprofils 7 in dem ersten Abschnitt 9 ab. An diesen ersten Abschnitt 9 schließt sich der zweite Abschnitt 11 an, in dem die Querschnittsfläche des Kernprofils 7 zunimmt. Die maximale Querschnittsfläche des zweiten Abschnitts 11 wird am Übergang zu dem anschließenden dritten Abschnitt 10 erreicht, wobei diese Querschnittsfläche kleiner als die maximale Querschnittsfläche des Kernprofils 7 im ersten Abschnitt 9 ist. Im dritten Abschnitt 10 nimmt die Querschnittsfläche wiederum ab, wobei der Minimalwert der Querschnittsfläche am Übergang zu dem anschließenden vierten Abschnitt 12 erreicht wird. Diese minimale Querschnittsfläche des dritten Abschnitts 10 ist kleiner als die minimale Querschnittsfläche des ersten Abschnitts 9. Im vierten Abschnitt 12 nimmt die Querschnittsfläche der Kernprofils 7 wiederum bis zum freien Ende des Schneidbereichs 4 zu.

In den Figuren la bis 1c sind verschiedene Schnittansichten durch den Schneidbereich 4 des ersten Rotationsschneidwerkzeugs 1 gezeigt. In Figur la ist die Schnittansicht gemäß der Linie A-A aus Figur 1 gezeigt. In Figur 1b ist die Schnittansicht gemäß der Linie B-B aus Figur 1 gezeigt. In Figur 1c ist schließlich die Schnittansicht gemäß der Linie C-C aus Figur 1 gezeigt. Wie den Figuren 1a bis 1c zu entnehmen ist, ist die Querschnittsfläche des Kernprofils 7 jeweils unterschiedlich groß, jedoch immer kreisrund und symmetrisch zur Rotationsachse 2 des Rotationsschneidwerkzeugs 1 angeordnet.

Wie besonders aus den Schnittansichten der Figuren 1a bis 1c hervorgeht, weist das erste erfindungsgemäße Rotationsschneidwerkzeug 1 drei Schneiden 6 auf, zwischen denen jeweils eine Spannut 5 angeordnet ist. Die Spannuten 5 erstrecken sich in radialer Richtung bis zu dem Kernprofil 7.

Bei den folgenden weiteren erfindungsgemäßen Ausführungsformen sind im Vergleich zu dem ersten Rotationsschneidwerkzeug gleichnamige Elemente sind mit gleichen Bezugszeichen versehen.

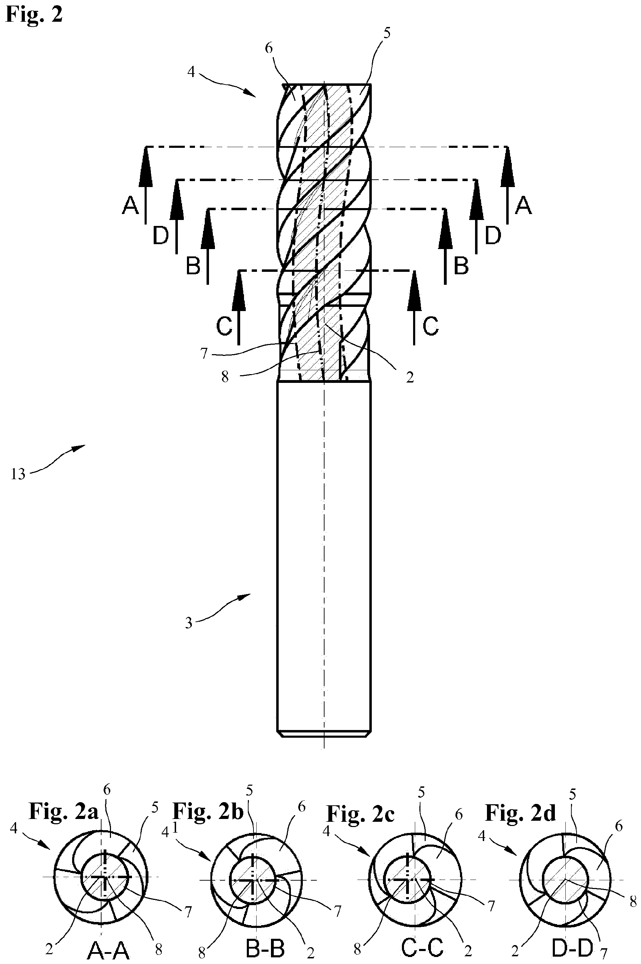

In Figur 2 ist ein zweites erfindungsgemäßes Rotationsschneidwerkzeug 13 dargestellt. Im Unterschied zur dem ersten Rotationswerkzeug 1 weist die Mittellinie 8 des Kernprofils 7 einen von der Rotationsachse 2 des Rotationsschneidwerkzeugs 1 abweichenden Verlauf auf. Die Mittellinie 8 und die Rotationsachse 2 sind folglich inkongruent bzw. nicht identisch.

Die Mittellinie 8 des Kernprofils 7 verläuft bei dem zweiten Rotationsschneidwerkzeug 13 über die Länge des Schneidbereichs 4 in Bezug auf die Rotationsachse 2 und in deren Richtung sinusförmig. In einer nicht dargestellten Version kann die Mittellinie 8 jedoch auch zu einer zu der Rotationsachse 2 parallel versetzten oder angewinkelten Bezugsachse sinusförmig verlaufen.

In den Figuren 2a bis 2d sind verschiedene Schnittansichten durch den Schneidbereich 4 des zweiten Rotationsschneidwerkzeugs 13 gezeigt. In Figur 2a ist die Schnittansicht gemäß der Linie A-A aus Figur 2 gezeigt. In Figur 2b ist die Schnittansicht gemäß der Linie B-B aus Figur 2 gezeigt. In Figur 2c ist die Schnittansicht gemäß der Linie C-C aus Figur 2 gezeigt und in Figur 2d ist schließlich die Schnittansicht gemäß der Linie D-D aus Figur 2 gezeigt. Wie den Figuren 2a bis 2d zu entnehmen ist, ist die Querschnittsfläche des Kernprofils 7 jeweils konstant gleich groß und kreisrund ausgebildet.

Wie aus den Schnittdarstellungen der Figuren 2a bis 2c hervorgeht, sind die Mittelpunkte der Querschnittsflächen des Kernprofils 7, welche die Mittellinie 8 bilden, an diesen Stellen in horizontaler Richtung von der Rotationsachse 2 versetzt. Die Bezugsebene, in welcher die sinusförmig verlaufende Mittellinie 8 angeordnet ist, enthält somit auch die Rotationsachse 2, so dass die sinusförmig verlaufende Mittellinie 8 und die Rotationsachse 2 sich an bestimmten Stellen, wie beispielsweise in Figur 2d gezeigt, schneiden. In einer nicht dargestellten Ausführungsform kann die Bezugsebene der sinusförmig verlaufenden Mittellinie 8 erfindungsgemäß auch parallel versetzt oder angewinkelt zu der Rotationsachse 2 ausgebildet sein. Mit dem sinusförmigen Verlauf ist es möglich, durch die Wahl bestimmter Amplituden und Wellenlängen des Sinusverlaufs eine optimale Auslegung zur Reduzierung der Schwingungsneigung des Rotationsschneidwerkzeugs 13 zu erreichen.

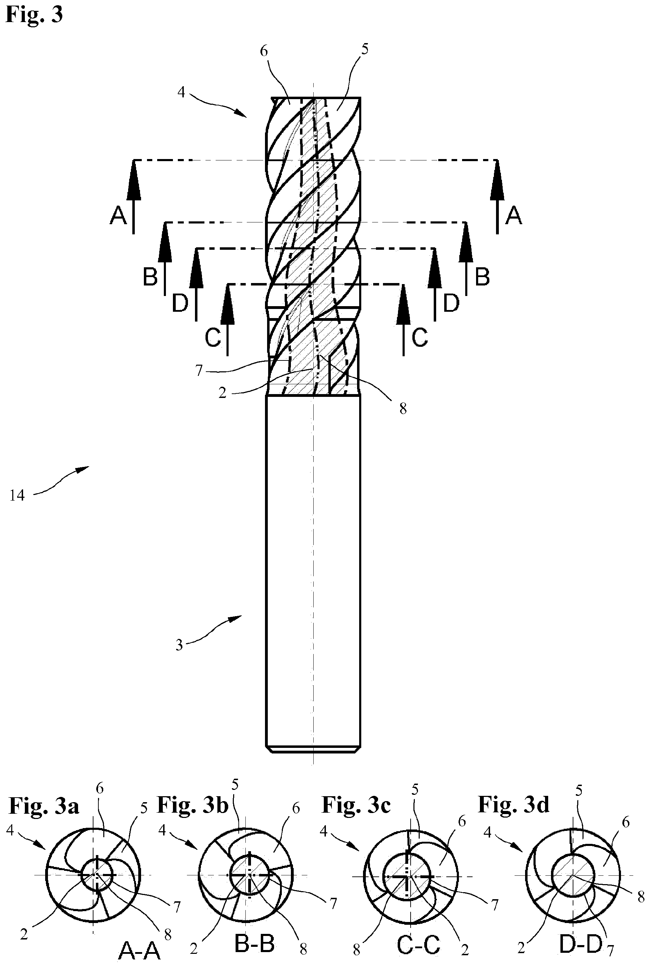

In Figur 3 ist eine Darstellung eines dritten erfindungsgemäßen Rotationsschneidwerkzeugs 14 gezeigt. Im Vergleich zu der Ausführungsform von Figur 2 nimmt die Querschnittsfläche des Kernprofils 7 zum freien Ende des Schneidbereichs 4 hin, also in Richtung vom Schaftbereich 3 zum Schneidbereich 4, über die gesamte Länge des Schneidbereichs 4 gleichmäßig ab. Wie auch bei dem zweiten erfindungsgemäßen Rotationsschneidwerkzeug 13 verläuft die Mittellinie 8 der Kernprofils 7 bei dem dritten erfindungsgemäßen Rotationsschneidwerkzeugs 14 über die Länge des Schneidbereichs 4 in Bezug auf die Rotationsachse 2 und in deren Richtung sinusförmig.

In den Figuren 3a bis 3d sind verschiedene Schnittansichten durch den Schneidbereich 4 des dritten Rotationsschneidwerkzeugs 14 gezeigt. In Figur 3a ist die Schnittansicht gemäß der Linie A-A aus Figur 3 gezeigt. In Figur 3b ist die Schnittansicht gemäß der Linie B-B aus Figur 3 gezeigt. In Figur 3c ist die Schnittansicht gemäß der Linie C-C aus Figur 3 gezeigt und in Figur 3d ist schließlich die Schnittansicht gemäß der Linie D-D aus Figur 3 gezeigt. Wie den Figuren 3a bis 3d zu entnehmen ist, ist die Querschnittsfläche des Kernprofils 7 unterschiedlich groß, jedoch immer kreisrund ausgebildet.

Wie aus den Figuren 3a bis 3d hervorgeht, enthält die Bezugsebene für die sinusförmig verlaufende Mittellinie 8 wie auch bei dem zweiten erfindungsgemäßen Rotationsschneidwerkzeug 13 die Rotationsachse 2. Zudem nimmt die Querschnittsfläche des Kernprofils 7 von Schnitt C-C aus Figur 3c, über Schnitt D-D aus Figur 3d, Schnitt B-B aus Figur 3b und Schnitt A-A aus Figur 3a kontinuierlich ab.

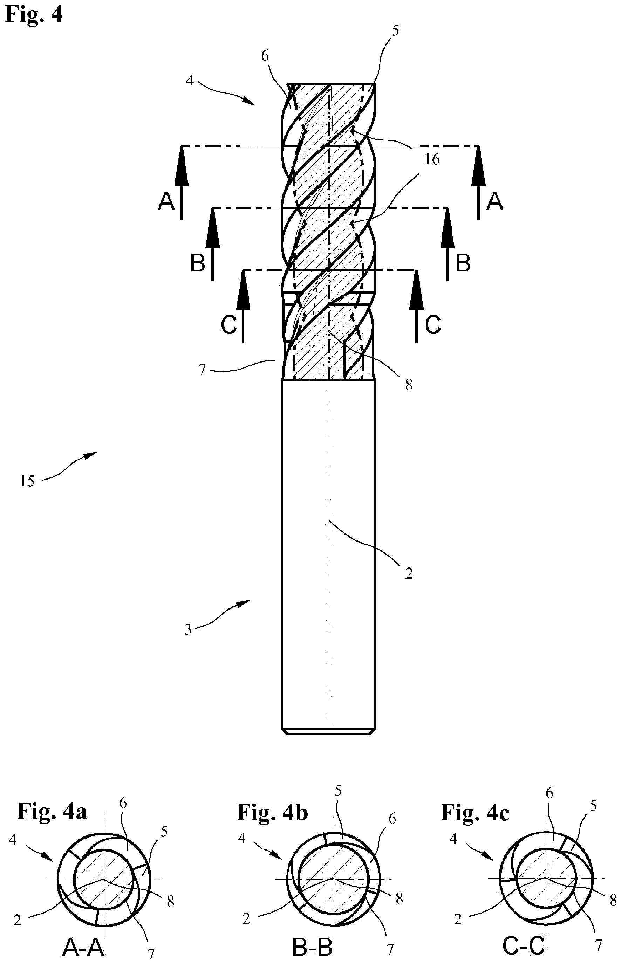

In Figur 4 ist eine Darstellung eines vierten erfindungsgemäßen Rotationsschneidwerkzeugs 15 gezeigt, bei welcher der Verlauf der Querschnittsflächen zwischen Abschnitten mit abnehmender Querschnittsfläche und Abschnitten mit zunehmender Querschnittsfläche unstetig ist, also einen Knick 16 aufweist. Zwischen den Knicken 16 ist ein Abschnitt mit zunehmender Querschnittsfläche und ein daran anschließender Abschnitt mit abnehmender Querschnittsfläche angeordnet. Die Zu- und Abnahme der Querschnittsfläche erfolgt gleichermaßen, so dass der Zwischenbereich zwischen den Knicken 16 bauchig ausgeführt ist und eine zur Rotationsachse 2 rechtwinklige Symmetrieebene aufweist. Eine derartige Symmetrieebene, in der die Querschnittsfläche des Kernprofils 7 sein Maximum erreicht, ist die Schnittebene entlang der Linie C-C.

Das Kernprofil 7 ist des Weiteren so ausgebildet, dass sich der bauchig ausgeführte Verlauf der Querschnittsfläche zwischen zwei derartigen Knicken 16 mehrfach wiederholt. Die Anordnung der Knicke 16 und die Radien der bauchig ausgeführten Zwischenbereiche des Kernprofils 7 erlauben eine Anpassung an die Schwingungsmodi des Schneidbereichs 4, so dass eine optimale Schwingungsdämpfung erfolgen kann.

In den Figuren 4a bis 4c sind verschiedene Schnittansichten durch den Schneidbereich 4 des vierten Rotationsschneidwerkzeugs 15 gezeigt. In Figur 4a ist die Schnittansicht gemäß der Linie A-A aus Figur 4 gezeigt. In Figur 4b ist die Schnittansicht gemäß der Linie B-B aus Figur 4 gezeigt. In Figur 4c ist schließlich die Schnittansicht gemäß der Linie C-C aus Figur 4 gezeigt. Wie den Figuren 4a bis 4d zu entnehmen ist, ist die Querschnittsfläche des Kernprofils 7 unterschiedlich groß, jedoch immer kreisrund ausgebildet. Zudem ist die Querschnittsfläche des Kernprofils 7 symmetrisch zur Rotationsachse 2 angeordnet, so dass die Mittellinie 8 des Kernprofils 7 und die Rotationsachse 2 zusammenfallen.

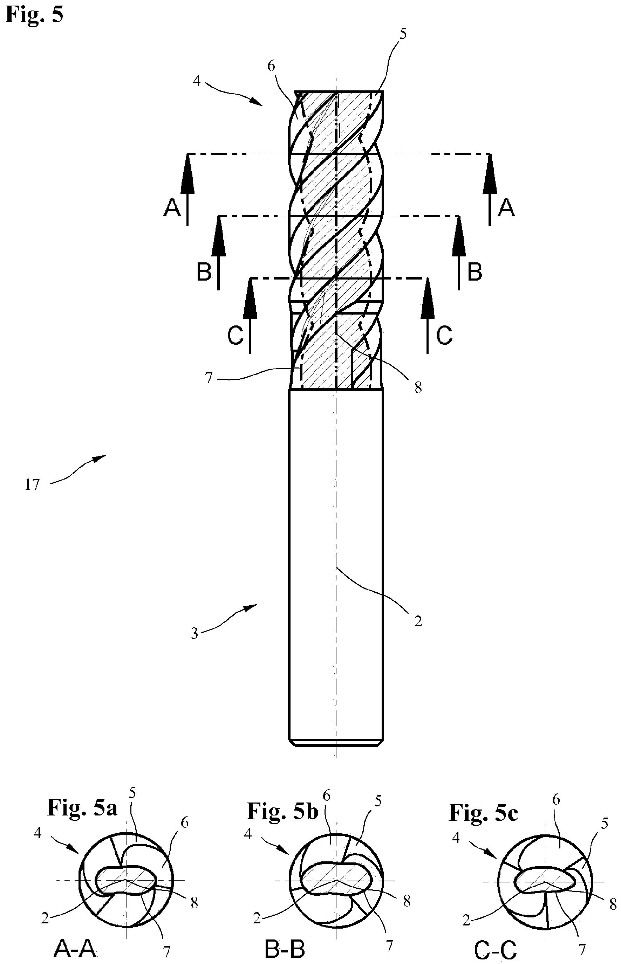

In Figur 5 ist eine Darstellung eines fünften erfindungsgemäßen Rotationsschneidwerkzeugs 17 gezeigt, bei welchem im Unterschied zu dem vierten Rotationsschneidwerkzeug 15 die Querschnittsfläche des Kernprofils 7 nicht rund, sondern in einer von der Kreisform abweichenden Form ausgebildet ist.

In den Figuren 5a bis 5c sind verschiedene Schnittansichten durch den Schneidbereich 4 des fünften Rotationsschneidwerkzeugs 17 gezeigt. In Figur 5a ist die Schnittansicht gemäß der Linie A-A aus Figur 5 gezeigt. In Figur 5b ist die Schnittansicht gemäß der Linie B-B aus Figur 5 gezeigt. In Figur 5c ist schließlich die Schnittansicht gemäß der Linie C-C aus Figur 5 gezeigt. Wie den Figuren 5a bis 5c zu entnehmen ist, weist die Querschnittsfläche des Kernprofils 7 eine unregelmäßige, allseits abgerundete und längliche Form auf, die sich über die Länge des Schneidbereichs 4 verändert. Insbesondere ist die Querschnittsfläche asymmetrisch ausgebildet, weist also keine Symmetrie auf. Die Mittellinie 8 wird wie bei den übrigen Ausführungsbeispielen durch den geometrischen Schwerpunkt der Querschnittsflächen des Kernprofils 7 gebildet. Da die geometrischen Schwerpunkte der Querschnittsflächen auf der Rotationsachse 2 liegen, ist die Mittellinie 8 folglich kongruent zu der Rotationsachse 2.

Die in den verschiedenen Ausführungsbeispielen gezeigten Merkmale können ohne Weiteres kombiniert werden. Ein Merkmal einer Ausführungsform ist damit nicht auf diese Ausführungsform beschränkt. Insbesondere ist die Erfindung nicht auf die in den Ausführungsformen dargestellten Schaftfräser mit zylindrischen Außenformen des Schneidbereichs beschränkt, sondern es können auch Schneidbereiche mit konischen oder gekrümmten Außenformen verwendet werden. Zudem können auch weitere Merkmale zur Reduzierung der Schwingungsneigung, wie unterschiedliche Drallwinkel der Schneiden und/oder rechtwinklig zur Rotationsachse oder in Form einer Spirale verlaufende Spanbrechernuten, vorgesehen sein.

Um das Arbeitsverhalten des Rotationsschneidwerkzeugs weiter zu verbessern, kann die Zahnbreite, das heißt die Breite der Schneide 6, und/oder die Breite der Spannut 5 dem Verlauf der Querschnittsfläche des Kernprofils 7 bzw. bei der gezeigten kreisrunden Querschnittsfläche dem Verlauf des Kerndurchmessers folgen. Das bedeutet, dass sich die jeweilige Breite zusammen mit der zu- bzw. abnehmenden Querschnittsfläche des Kernprofils 7 verändert und in einem ähnlichen oder gleichen Verhältnis zu- oder abnimmt.

## Patentansprüche

1. Rotationsschneidwerkzeug (1; 13; 14; 15; 17) mit einer Rotationsachse (2), einem Schaftbereich (3) und einem Schneidbereich (4), wobei das Rotationswerkzeug (1; 13; 14; 15; 17) im Schneidbereich (4) bis zu einem Kernprofil (7) reichende Spannuten (5) aufweist, **dadurch gekennzeichnet, dass** das Kernprofil (7) über die Länge des Schneidbereichs (4) mehrere einander abwechselnde Abschnitte mit zunehmender Querschnittfläche (11; 12) und Abschnitte mit abnehmender Querschnittsfläche (9; 10) enthält.

2. Rotationsschneidwerkzeug nach Anspruch 1, **dadurch gekennzeichnet, dass** die Mittellinie (8) des Kernprofils (7) einen von der Rotationsachse (2) des Rotationsschneidwerkzeugs (13; 14) abweichenden Verlauf aufweist.

3. Rotationsschneidwerkzeug nach Anspruch 2, **dadurch gekennzeichnet, dass** die Mittellinie (8) des Kernprofils (7) über die Länge des Schneidbereichs (4) auf einer spiralförmigen Bahn verläuft.

4. Rotationsschneidwerkzeug nach Anspruch 3, **dadurch gekennzeichnet, dass** die auf der spiralförmigen Bahn verlaufende Mittellinie (8) eine zu der Rotationsachse (2) kongruente Mittelachse aufweist.

5. Rotationsschneidwerkzeug nach Anspruch 2, **dadurch gekennzeichnet, dass** die Mittellinie (8) des Kernprofils (7) über die Länge des Schneidbereichs (4) sinusförmig verläuft.

6. Rotationsschneidwerkzeug nach Anspruch 5, **dadurch gekennzeichnet, dass** die sinusförmig verlaufende Mittellinie (8) die Rotationsachse (2) des Rotationsschneidwerkzeugs (13; 14) schneidet.

7. Rotationsschneidwerkzeug nach einem der Ansprüche 1 bis 6, **dadurch gekennzeichnet, dass** die Querschnittsfläche des Kernprofils (7) in Richtung vom Schaftbereich (3) zum Schneidbereich (4) hin abnimmt.

8. Rotationsschneidwerkzeug nach einem der vorhergehenden Ansprüche, **dadurch gekennzeichnet, dass** das Kernprofil (7) eine kreisrunde oder eine von der Kreisform abweichende Querschnittsfläche aufweist.

9. Rotationsschneidwerkzeug nach einem der vorhergehenden Ansprüche, **dadurch gekennzeichnet, dass** im Schneidbereich (4) Schneiden (6) vorgesehen sind.

10. Rotationsschneidwerkzeug nach Anspruch 9, **dadurch gekennzeichnet, dass** die Schneiden (6) unterschiedliche Drallwinkel und/oder rechtwinklig zur Rotationsachse (2) oder in Form einer Spirale verlaufende Spanbrechernuten aufweisen.

11. Rotationsschneidwerkzeug nach einem der Ansprüche 9 oder 10, **dadurch gekennzeichnet, dass** die Breite der Schneiden (6) dem Verlauf des Kerndurchmessers des Kernprofils (7) folgt.

12. Rotationsschneidwerkzeug nach einem der vorhergehenden Ansprüche, **dadurch gekennzeichnet, dass** der Schneidbereich (4) eine zylindrische, konische oder gekrümmte Außenform aufweist.

13. Rotationsschneidwerkzeug nach einem der vorhergehenden Ansprüche, **dadurch gekennzeichnet, dass** die Breite der Spannuten (5) dem Verlauf des Kerndurchmessers des Kernprofils (7) folgt.

## Claims

1. Rotary cutting tool (1; 13; 14; 15; 17) having an axis of rotation (2), a shank region (3) and a cutting region (4), wherein the rotary tool (1; 13; 14; 15; 17) has flutes (5) that extend in the cutting region (4) as far as a core profile (7), **characterized in that** the core profile (7) contains, along the length of the cutting region (4), a plurality of mutually alternating portions with an increasing cross-sectional area (11; 12) and portions with a decreasing cross-sectional area (9; 10) .

2. Rotary cutting tool according to Claim 1, **characterized in that** the centre line (8) of the core profile (7) has a profile that deviates from the axis of rotation (2) of the rotary cutting tool (13; 14).

3. Rotary cutting tool according to Claim 2, **characterized in that** the centre line (8) of the core profile (7) extends on a spiral path along the length of the cutting region (4).

4. Rotary cutting tool according to Claim 3, **characterized in that** the centre line (8) extending on the spiral path has a central axis congruent with the axis of rotation (2).

5. Rotary cutting tool according to Claim 2, **characterized in that** the centre line (8) of the core profile (7) extends sinusoidally along the length of the cutting region (4).

6. Rotary cutting tool according to Claim 5, **characterized in that** the sinusoidally extending centre line (8) intersects the axis of rotation (2) of the rotary cutting tool (13; 14).

7. Rotary cutting tool according to any of Claims 1 to 6, **characterized in that** the cross-sectional area of the core profile (7) decreases in the direction from the shank region (3) to the cutting region (4).

8. Rotary cutting tool according to any of the preceding claims, **characterized in that** the core profile (7) has a circular cross-sectional area or a cross-sectional area that deviates from the circular shape.

9. Rotary cutting tool according to any of the preceding claims, **characterized in that** cutting edges (6) are provided in the cutting region (4).

10. Rotary cutting tool according to Claim 9, **characterized in that** the cutting edges (6) have different angles of twist and/or chip breaker flutes that extend at right angles to the axis of rotation (2) or in the form of a spiral.

11. Rotary cutting tool according to either of Claims 9 and 10, **characterized in that** the width of the cutting edges (6) follows the profile of the core diameter of the core profile (7).

12. Rotary cutting tool according to any of the preceding claims, **characterized in that** the cutting region (4) has a cylindrical, conical or curved external shape.

13. Rotary cutting tool according to any of the preceding claims, **characterized in that** the width of the flutes (5) follows the profile of the core diameter of the core profile (7).

## Revendications

1. Outil de coupe rotatif (1 ; 13 ; 14 ; 15 ; 17) avec un axe de rotation (2), une zone de tige (3) et une zone de coupe (4), l'outil rotatif (1 ; 13 ; 14 ; 15 ; 17) présentant dans la zone de coupe (4) des rainures à copeaux (5) s'étendant jusqu'à un profil de noyau (7), **caractérisé en ce que** le profil de noyau (7) contient, sur la longueur de la zone de coupe (4), plusieurs sections à surface de section transversale croissante (11 ; 12) et sections à surface de section transversale décroissante (9 ; 10) alternant entre elles.

2. Outil de coupe rotatif selon la revendication 1, **caractérisé en ce que** la ligne médiane (8) du profil de noyau (7) présente un tracé différent de l'axe de rotation (2) de l'outil de coupe rotatif (13 ; 14).

3. Outil de coupe rotatif selon la revendication 2, **caractérisé en ce que** la ligne médiane (8) du profil de noyau (7) s'étend sur la longueur de la zone de coupe (4) sur une trajectoire en spirale.

4. Outil de coupe rotatif selon la revendication 3, **caractérisé en ce que** la ligne médiane (8) s'étendant sur la trajectoire en spirale présente un axe médian congruent à l'axe de rotation (2).

5. Outil de coupe rotatif selon la revendication 2, **caractérisé en ce que** la ligne médiane (8) du profil de noyau (7) s'étend sous forme sinusoïdale sur la longueur de la zone de coupe (4).

6. Outil de coupe rotatif selon la revendication 5, **caractérisé en ce que** la ligne médiane s'étendant sous forme sinusoïdale (8) coupe l'axe de rotation (2) de l'outil de coupe rotatif (13 ; 14).

7. Outil de coupe rotatif selon l'une quelconque des revendications 1 à 6, **caractérisé en ce que** la surface de section transversale du profil de noyau (7) diminue dans la direction allant de la zone de tige (3) vers la zone de coupe (4).

8. Outil de coupe rotatif selon l'une quelconque des revendications précédentes, **caractérisé en ce que** le profil de noyau (7) présente une surface de section transversale circulaire ou différente de la forme circulaire.

9. Outil de coupe rotatif selon l'une quelconque des revendications précédentes, **caractérisé en ce que** des tranchants (6) sont prévus dans la zone de coupe (4).

10. Outil de coupe rotatif selon la revendication 9, **caractérisé en ce que** les tranchants (6) présentent des angles de torsion différents et/ou des rainures brise-copeaux s'étendant à angle droit de l'axe de rotation (2) ou sous la forme d'une spirale.

11. Outil de coupe rotatif selon l'une quelconque des revendications 9 ou 10, **caractérisé en ce que** la largeur des tranchants (6) suit le tracé du diamètre de noyau du profil de noyau (7).

12. Outil de coupe rotatif selon l'une quelconque des revendications précédentes, **caractérisé en ce que** la zone de coupe (4) présente une forme extérieure cylindrique, conique ou incurvée.

13. Outil de coupe rotatif selon l'une quelconque des revendications précédentes, **caractérisé en ce que** la largeur des rainures à copeaux (5) suit le tracé du diamètre de noyau du profil de noyau (7).
